Europäisches Patentamt

European Patent Office

Office européen des brevets

(19)

(11) **EP 0 866 741 B1**

(12) **EUROPÄISCHE PATENTSCHRIFT**

(45) Veröffentlichungstag und Bekanntmachung des Hinweises auf die Patenterteilung:
**02.05.2002 Patentblatt 2002/18**

(51) Int Cl.$^7$: **B23K 35/30**, B23K 9/04, E01B 31/18

(21) Anmeldenummer: **96937976.7**

(22) Anmeldetag: **22.11.1996**

(86) Internationale Anmeldenummer:
**PCT/CZ96/00023**

(87) Internationale Veröffentlichungsnummer:
**WO 97/18921 (29.05.1997 Gazette 1997/23)**

(54) **VERFAHREN ZUR AUFSCHWEISSUNG DER SCHIENEN**

METHOD OF WELDING MATERIAL ONTO RAILS

PROCEDE POUR SOUDER UN METAL D'APPORT SUR DES RAILS

(84) Benannte Vertragsstaaten:
**AT BE CH DE ES FI FR GB IT LI LU NL PT SE**

(30) Priorität: **23.11.1995 CZ 308795**
**22.11.1996 CZ 343696**

(43) Veröffentlichungstag der Anmeldung:
**30.09.1998 Patentblatt 1998/40**

(73) Patentinhaber: **Jinpo Plus A.S.**
**709 01 Ostrava-Marianske Hory (CZ)**

(72) Erfinder:
• **FOLDYNA, Václav**
**705 00 Ostrava-Hrabuvka (CZ)**
• **HLAVATY, Ivo**
**721 00 Ostrava-Svinov (CZ)**
• **PETROS , Kamil**
**705 00 Ostrava-Hrabuvka (CZ)**
• **POLACH, Jaromir**
**708 00 Ostrava-Poruba (CZ)**
• **KÜBEL, Zdenek**
**742 58 Pr ibor (CZ)**
• **HROTIK, Michal**
**708 00 Ostrava-Poruba (CZ)**

(74) Vertreter: **Köhler-Pavlik, Johann, Dipl.-Ing.**
**Patentanwälte**
**Sonn, Pawloy, Weinzinger & Köhler-Pavlik**
**Riemergasse 14**
**1010 Wien (AT)**

(56) Entgegenhaltungen:
**EP-A- 0 103 566**          **DE-A- 2 539 944**
**DE-A- 2 621 357**          **US-A- 3 175 074**

• **PATENT ABSTRACTS OF JAPAN vol. 095, no. 010, 30.November 1995 & JP 07 185881 A (NIPPON STEEL CORP), 25.Juli 1995,**

EP 0 866 741 B1

## Beschreibung

Die Erfindung betrifft ein Verfahren zur automatischen oder halbautomatischen Aufschweißung der abgenutzten Abschnitte der Schienenköpfe, sowie auch anderer, mehr beanspruchter Stellen der Gleisanlage, wie zum Beispiel der Weichenzungen und der Herzstücke bei der Kreuzungen der Schienen, wo eine Auftragsschweißung ein abgenutztes oder anders beschädigtes Profil der Schiene, bzw. der Gleisanlage vorteilhaft, unmittelbar auf dem Bahnkörper ohne seine Demontage ergänzt.

Bei den bisher bekannten Verfahren wird die Aufschweißung der abgenutzten Abschnitte der Schienenköpfe, der Weichenzungen und der Herzstücke bei der Kreuzung der Schienen meistens durch ein Aufschweißen des Zusatzmaterials mittels des elektrischen Lichtbogens, und zwar mit der Hand mit einer umhüllten Elektrode oder mit einem Schweißautomaten mittels Volldrahts oder Röhrchendrahts mit Eigenschutz, in einer Schutzatmosphäre oder unter dem Flußmittel durchgeführt.

Die Schienen sind gewöhnlich aus einem Stahl mit der Härte von ca. 250 HV bis ca. 290 HV hergestellt, deren chemische Zusammensetzung im Bereich C=0,06 -0,10%, Mn=0,5-1,5%> Si=0,05-0,5%, der Rückstand bildet Fe und Herstellungsverunreinigkeiten, rangiert. Ähnliche chemische Zusammensetzung besitzen auch die, in der US Patentschrift 3 175 074 in der Tabelle I angeführte typischen Stahlschienen.

Die automatische Aufschweißung ist gegenüber der Handaufschweißung von dem Standpunkt der Arbeitsproduktivität, einer unveränderlichen Qualität der Auftragsschweißung in der ganzen Länge des aufgeschweißten Abschnittes, als Folge der Minimalisierung des Einflußes des menschlichen Faktors, vorteilhaft.

Bei der Aufschweißung mit einem Schweißautomaten unter dem Flußmittel werden bisher Zusatzmaterialien aus mittel- oder hochlegierten Stählen benutzt, deren chemische Zusammensetzung in einem Bereich rangiert: Kohlenstoff C = 0,04 bis 0,15%, Silizium Si = 0,05 bis 1,0 %, Mangan Mn = 1,1 bis 15,0 %, Chrom Cr = 0,05 bis 20,0 %, Nickel = 0,05 bis 13,0 %, Molybdän Mo = 0,05 bis 1,0 %, Aluminium Al = 0,02 bis 1,5 %, Vanadin V = 0,05 bis 0,6 % ist, wobei der Rückstand durch Eisen Fe und Herstellungsunreinigkeiten gebildet ist. Diese Zusatzmaterialien werden gewöhnlich nach der Empfehlung des Herstellers auf eine auf 350 bis 400° C vorgeheizte Schiene, unter dem Flußmittel von einer Basizität pH = 1,3 bis 3,2, bei den Aufschweißparametern im Bereich von Spannung U = 25 bis 32 V, Stromintensität I = 270 bis 550 A und Geschwindigkeit der Aufschweißung v = 55 bis 85 cm/min. aufgeschweißt. Ähnliche Parametern zur Aufschweißung eines Mnaustenitischen Zusatzmaterials auf Schiene sind z.B. aus der DE-OS 25 39 944 bekannt.

Die Hauptnachteile dieser Verfahren zur Aufschweißung bestehen in der Anwendung teuerer, hochlegierten Zusatzmateriatien und in einigen Fällen in einer überflüssigen oder sogar schädlich hohen Härte der Auftragsschweißung, welche um mehr als 30% höher als die Härte des Grundmaterials der Schiene ist. Dabei sich die Härte der Auftragsschweißung bei dem nachfolgenden Betrieb durch eine von dem Rollen der Räder des Fahrgestells auf den Schienen hervorgerufene mechanische Beanspruchung weiter erhöht. Eine höhere Härte der Auftragsschweißung als die Härte der Schienen ist nachteilig oder sogar schädlich, zum Beispiel in den Gleisanlagebogen, wo sie eine schnelle Abnutzung der Spurkränze der Räder des Straßenbahm- oder Eisenbahnfahrgestells verursacht, was weiter Zusatzkosten bei seinem Wechsel oder seiner Erneuerung verursacht.

Weitere Nachteile dieser Verfahren bestehen darin, daß eine weitere Wiederherstellen solcher Auftragschweißungen nach ihren Verschleiß wegen einer sehr schwierigen Bearbeitbarkeit nicht möglich ist, und daß bei der Aufschweißung eine Vorwärmung der Schienen auf 350 bis 400 °C in den meisten Fällen nötig ist.

Aus der DE-OS 26 21 357 ist ein Verfahren zum Wiederherstellen der seitlich ausgefahrenen Führungsflächen von Schienen, die eine Festigkeit von 700 bis 900 N /mm$^2$ besitzen und einen Gehalt von ca. C=0,5 bis 0,6%, Mn=0,8 bis 1,0% aufweisen, bekannt. Laut diesem Verfahren werden die seitlichen Verschleißstellen zunächst volständig mit einem ferritischen Schweißzusatzmaterial ausgefüllt, der ca. 0,07% Kohlenstoff, 0,5% Silicium und 1,6% Mangan aufweißt und eine Festigkeit von ca. 600N/mm$^2$ besitzt, danach wird in diese weiche Ausfüllung eine Ausnehmung ausgearbeitet, die dann mit austenitischen Schweißwerkstoff ausgefüllt wird.

Ein Nachteil dieses Verfahrens ist, daß die ferritische Auftragschweisung die Festigkeit von nur 600N/mm$^2$ besitzt, die wesentlich niedriger als die Festigkeit des Schienengrundmaterials ist und sie kann bloß als eine Unterschicht für teures austenitischen Schweißwerkstoff dienen.

Eine Aufschweißung der Schienenköpfe mit Automaten unter dem Flußmittel mit anderen als obengenannten Materialien wurde nicht durchgeführt, weil ein Vorurteil existierte, daß bei der Aufschweißung eines nichtlegierten Zusatzmaterials, entweder eine ungeeignete martensitische Struktur oder unerwünschte Riße in der Auftragsschweißung oder in ihrer Umgebung enstehen.

Der Erfindung liegt die Aufgabe zugrunde, ein Verfahren zur automatischen oder halbautomatischen Aufschweißung der abgenutzten Abschnitte der Schienenköpfe zu schaffen, wodurch eine Härte der ferritischen Auftragsschweißung im Bereich von ca 250 HV bis ca 315 HV erzielt wird, was im wesentlichen der Härte des Grundmaterials der Schienen entspricht.

Eine weitere Aufgabe der vorliegenden Erfindung ist die Erzielung einer Härte der Auftragsschweißung von 285 HV bis 350 HV unter Anwendung der niedriglegierten Zusatzmaterialien. Dabei kann diese niedriglegierte Auftragschweißung bereits die Oberfläche des Schienenkopfes oder die Unterschicht für nachstehende Aufschweißung der bekannten mehrlegierten Zusatzmaterialien bilden.

Diese Aufgaben werden durch die in den Ansprüchen 1, 4 und 7 angeführten Merkmale gelöst, wobei weitere vorteilhafte Merkmale in den Unteransprüchen angeführt sind.

Das Wesen des vorliegenden Verfahrens zur automatischen oder halbautomatischen Aufschweißung eines Zusatzmaterials unter Anwendung eines Flußmittels von Basizität pH =1,3 bis 3,2 auf die abgenutzten oberen und/ oder seitlichen Flächen von Schienen, zum Beispiel von Schienenköpfen, Weichenzungen oder Herzstücken von Schienenkreuzungen von Gleisanlagen, wobei die Stahlschienen eine chemische Zusammensetzung bestehend aus Kohlenstoff C = 0,45 bis 0,82%, Mangan Mn = 0,7 bis 1,5 %, Silizium Si = 0,07 bis 0,55 %, aufweisen wobei der Rest durch Eisen Fe und Herstellungsverunreinigungen gebildet ist, besteht darin, daß das Zusatzmaterial eine chemische Zusammensetzung bestehend aus Kohlenstoff C = 0,06 - 0,10 %, Mangan Mn = 0,5 bis 1,5 %, Silizium Si = 0,05 bis 0,5 %, und dem Rest aus Eisen Fe und Herstellungverunreinigungen aufweist, das auf den Schienenkopf mittels Lichtbogens bei einer Menge der eingetragenen Wärme Q =(5,9 bis 8,0 kJ/cm). K aufgetragen ist, wobei K = 1 für die Aufschweißung der oberen Schienenfläche und K = 2,6 für die Aufschweißung der seitlichen Schienenfläche und die Vorschubgeschwindigkeit v = 40 bis 75 cm/min. gewählt wird und, wobei Q = η . 60 . U. I/v, wobei η = Wirkungsgrad, U = Spannung, I= Stromintensität und v = Vorschubgeschwindigkeit.

Mit diesem Verfahren, d.h. bei Anwendung eines billigen ferritischen Zusatzmaterials und ohne Notwendigkeit einer Vorwärmung der Schienen, erzielt man eine Auftragsschweißung, deren Härte nicht die Härte des Grundmaterials der Schiene um mehr als 10% überschreitet und liegt also im Bereich ca von 250 HV bis ca 315 HV, wobei weder die Auftragsschweißung noch ihre Umgebung eine unzulässige martensitische Struktur oder Riße aufweisen.

Diese Auftragschweißung eignet sich insbesondere zur Wiederherstellung der Schienenköpfe auf den wenig beanspruchten Stellen der Gleisanlagen, wie z.B. in den geraden Abschnitten und Gleisbogen.

Mit Rücksicht darauf, daß die chemische Zusammensetzung sowohl der Schienen als auch des Zusatzmaterials in bestimmten Toleranzen rangiert, ist es vorteilhaft, wenn man die Parameter für die Aufschweißung der oberen Fläche des Schienenkopfs in diesem Bereich wählt: Spannung U = 24 bis 27 V, Stromintensität I = 250 bis 350 A und die Parameter für die Aufschweißung der seitlichen Flächen des Schienenkopfs: Spannung U = 34 bis 38 V, Stromintensität I = 450 bis 550 A.

Bei der Aufschweißung mit diesen Parametern erzielt man bei allen möglichen Toleranzkombinationen der chemischen Zusammensetzungen und der Unreinigkeiten des Grundmaterials der Schiene und des Zusatzmaterials immer eine Auftragsschweißung ohne die unzulässige martensitische Struktur und ohne schädliche Riße.

Falls es nötig ist, eine höhere Härte der Auftragsschweißung bis zu ca 350 HV zu erzielen, ist es vorteilhaft, ein Zusatzmaterial eine chemische Zusammensetzung bestehend aus Kohlenstoff C = 0,06 - 0,10 %, Mangan Mn = 0,5 - 1,5 %, Silizium Si = 0,05 - 0,5 %, Nickel Ni = 1,8 bis 4,5 %, Vanadin V = 0,0 bis 0,2 %, Molybdän Mo = 0,0 bis 0,3 %, Niob Nb = 0,0 bis 0,1 %, Chrom Cr = 0,0 bis 0,4 %, Aluminium Al = 0,0 bis 1,6 %, Titan Ti = 0,0 bis 0,1 %, wobei die Gesamtmasse des Nickels Ni, Vanadins V, Molybdäns Mo, Niobs Nb, Chroms Cr, Aluminiums Al und Titans Ti in der Summe nicht 5 % übersteigt, und dem Rest aus Eisen Fe und Herstellungsverunreinigungen, aufweist, das auf die Schiene mittels eines Lichtbogens bei einer Menge der eingetragenen Wärme Q = (5,9 bis 11,5 kJ/cm). K aufgetragen ist, wobei K= 1 für die Aufschweißung der oberen Schienenfläche und K = 2,6 für die Aufschweißung der seitlichen Schienenfläche und die Vorschubgeschwindigkeit v = 40 bis 75 cm/min, gewählt wird, wobei Q = η . 60 . U. I/v, η = Wirkungsgrad, U = Spannung, I = Stromintensität und v= Vorschubgeschwindigkeit.

Diese Auftragschweißung eignet sich insbesondere zur Wiederherstellung von Scheienköpfen auf den mehr beanspruchten Stellen der Gleisanlage , wie z.B. Gleisverbindungen, Weichenzungen und Herzstücke bei den Kreuzungen der Schienen.

Dabei ist es vorteilhaft die Aufschweißungparameter der oberen Schienenflächen im Bereich U = 24 bis 34 V, I = 250 bis 350 A und für die Aufschweißung der seitlichen Schienenflächen im Bereich U = 34 bis 38 V, I= 450 bis 550 A zu wählen.

Falls es nötig ist, eine Auftragsschweißung zu erzielen, deren Oberflächenschicht eine Härte von ca 350 HV bis ca 500 HV besitzt, ohne vorheige Vorwärmung des zu reparierenden Abschnittes der Gleisanlage, ist es vorteilhaft, wenn auf die nach dem vorliegenden erfinderischen Verfahren durchgeführte Unterlegschicht eine höhere Oberflächenschicht aus einem bekannten mehr-oder hochlegierten Materiel aufgeschweißt wird.

Diese Auftragschweißungen sind für die hoch- und extrembeanspruchten Stellen der Gleisanlage, wie z.B. Weichenzungen und Herzstücke bei den Kreuzungen der Schienen geeignet.

Bei solcher aufschweißung erzielt man eine erhebliche Ersparnis des mehrlegierten und deshalb teuereren Zusatzmaterials, weil das ganze abgenutzte Volumen des reparierenden Abschnittes der Gleisanlage nicht mehr mit ihm ausfüllt wird, sondern nur sein oberer Teil. Ferner kommt es dank der Unterlegschicht zu einer beschränkten Diffusion des Kohlenstoffes C aus dem Grundmaterial der Schiene in die Auftragsschweißung, so daß die bisher nötige Vorwärmung des zu reparierenden Abschnittes entfällt, wobei man mindestens eine gleiche Qualität der Auftragsschweißung wie bei der Vorwärmung erzielt.

Falls es nötig ist, eine Härte der Auftragsschweißung bis zu ca 400 HV zu erzielen, welche sich bei einer nachfolgenden mechanischen Beanspruchung nicht mehr auffällend erhöht, ist es vorteilhaft, auf die Unterlegschicht ein mehrlegiertes Zusatzmaterial von einer richtmaßgebenden chemischen Zusammensetzung aufzuschweißen: Kohlenstoff C = 0,15 %, Silizium Si = max. 0,5 %, Mangan Mn = 1,1 %, Chrom Cr =1,0 %, Nickel Ni = 2,3 %, Molybdän Mo = 0,5 %, Aluminium Al = 1,4 %, wobei der Rückstand durch Eisen Fe und Herstellungsunreinigkeiten gebildet ist.

Falls es nötig ist, eine Härte der Auftragsschweißung, die nach der mechanischen Verfestigung ca 500 HV besitzt, ist es vorteilhaft, auf die Unterlegschicht hochlegiertes Zusatzmaterial von einer richtmaß gebenden chemischen Zusammensetzung aufzuschweißen: Kohlenstoff C = 0,3 %, Silizium Si = 0,55 %, Mangan Mn = 13,5 %, Chrom Cr =16,0 %, Nickel Ni = 1,7 %, Molybdän Mo = 0,8 %, Vanadin V = 0,6 %, wobei der Rückstand durch Eisen Fe und Herstellungsunreinigkeiten gebildet ist.

Aus dem Grunde der Bildung eines möglichst wenig gewellten Umrißes der Auftragsschweißung und damit einer Vereinfachung des nachfolgenden Nachschleifens sowie auch einer geeigneten Durchschweißung, ist es vorteilhaft, wenn die Achse der Düse, durch welche das Zusatzaufschweißmaterial in Form von Draht zugeführt ist, mit der Vertikale einen Winkel $\alpha$ = 0 bis 45° einschließt.

Weitere Vorteile der Erfindung sind der folgenden Beschreibung von in der Zeichnung schematisch dargestellten Ausführungsbeispielen der Schienenprofile entnehmbar, auf deren abgenutzten Köpfe das Zusatzmaterial aufgeschweißt wird. Es zeigen:

Fig.1 einen Querschnitt durch die Rillenschiene anderenfalls die Straßenbahnschiene;
Fg.2 einen Querschnitt durch die Kopfschiene anderenfalls die Eisenbahnschiene;
Fig.3 eine Verbindung der Enden von zwei Kopfschienen;
Fig.4 einen Querschnitt durch die Schienenende aus der Fig.3 bei der Aufsweißung
Fig.5 eine Weichenzunge und
Fig.6 einen Querschnitt durch die Weichenzunge aus der Fig.5

bei der Aufschweißung.

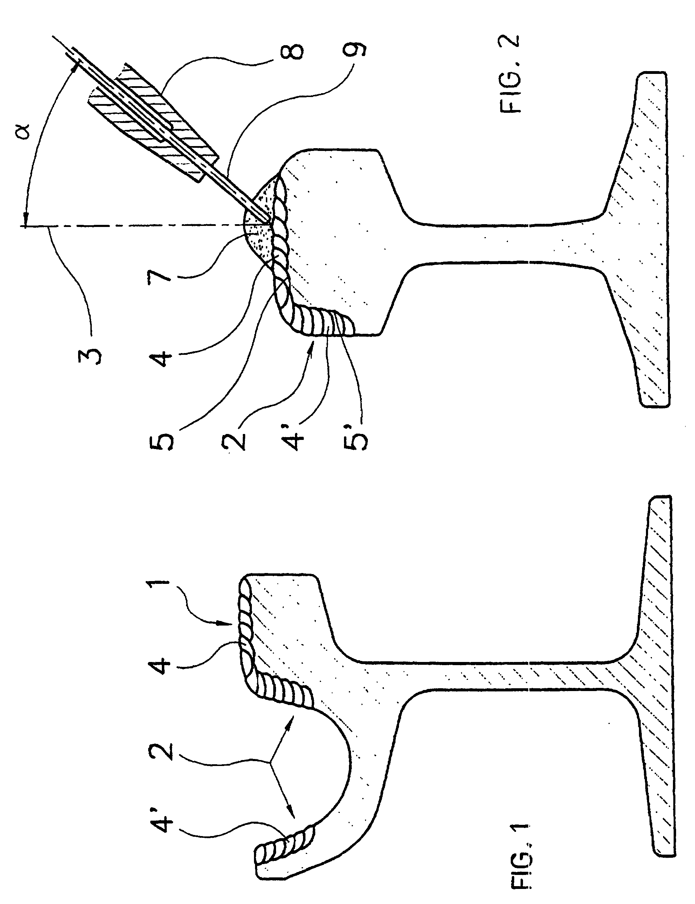

In der beiliegenden Fig. 1 ist der Schienenkopf einer Rillen-, Straßenbahnschiene und in der Fig.2 ist der Schienenkopf einer Kopf- Eisenbahnschiene im Querschnitt dargestellt, wo der schraffierte Teil eine Form des abgenutzten Schienenkopfs darstellt und die unschraffierten Teile ergänzen diese Form auf die Form des ursprünglichen unabgenutzten Schienenkopfs. Der abgenutzte obere Teil des Schienenkopfs ist mit dem Bezugszeichen **1** und der abgenutzte seitliche Teil des Schienenkopfs ist mit dem Bezugszeichen **2** gezeichnet. Die abgenutzten Oberflächen werden gesäubert und in Metallglanz geschliffen und der Kopf wird in die ursprüngliche Form durch die Aufschweißung des Zusatzmaterials ergänzt, welches der Aufschweißdraht **9** ist. Die Aufschweißung des Aufschweißdrahtes **9** wird mit einem Schweißautomaten unter Flußmittel **7**, bei den weiter angeführten Parametern durchgeführt. Die Schweiß raupen **4, 4'** werden auf eine unvorgewärmte Schiene der Gleisanlage in Längsrichtung bei einer Temperatur der äußeren Atmosphäre gleich oder höher als 10° C aufgetragen und vor der Auftragung der nachstehenden benachbarten oder oberen Schweißraupe wird die vorgehende Schweißraupe immer gesäubert. Wie aus der Fig.2 hervorgeht, schließt die Achse der Düse, durch welche der Aufschweißdraht **9** zugeführt ist, mit der Vertikale einen Winkel $\alpha$ = 0 bis 45° ein, womit einerseits eine minimale Welligkeit der durch die Einhüllende der Schweißraupen **4, 4'** gebildete Oberfläche und andererseits der geeigneten Durchschweißung erzielt wird. Die Schweißraupen **4, 4'** werden auf das Grundmaterial der Schiene in einer Schmelzfläche **5, 5'** und auf die seitliche bzw. die obere Oberfläche der vorstehenden Schweißraupe aufgeschweißt. Die Schmelzfläche **5** der oberen Schweißraupe **4** ist K mal größer als die Schmelzfläche **5'** der seillichen Schweißraupe **4'**, wobei die Konstante K = 2,6. In diesem Verhältnis diffundiert auch der Kohlenstoff aus dem Grundmaterial der Schiene in die Auftragsschweißung bei der konstanten eingetragenen Wärme Q, so daß bei der Aufschweißung der seitlichen Schweißraupen **4'** es möglich ist, die eingetragene Wärme $Q_s$ auf den Wert $Q_s = Q_o$ mal K zu erhöhen, ohne daß es zu einer markanten Erhöhung des Kohlenstoffinhalts in der seitlichen Auftragsschweißung kommt.

Dabei :

$Q_s$ = eingetragene Wärme Q bei der Aufschweißung der seitlichen Fläche
$Q_o$ = eingetragene Wärme Q bei der Aufschweißung der oberen Fläche
K = Konstante 2,6
Q = $\eta$ . 60 . U . I/v (kJ/cm)
$\eta$ = Wirkungsgrad der Quelle (ca 0,95 bei der Aufschweißung mit dem Automaten unter Flußmittel)
U = Schweißspannung in V
I = Intensität des Schweißstromes in A
v = Vorschubgeschwindigkeit der Aufschweißdüse (cm/min.)

Der Kohlenstoffgehalt in der Auftragsschweißung beeinflußt wesentlich ihre Struktur und darf nicht größer als 0,3% sein, damit die Auftragsschweißung keine martensitische Struktur und unerwünschten Riße enthält. Die chemische Zusammensetzung der Stahlschienen, worauf die Auftragsschweißung durchgeführt wird, rangiert im Bereich: Kohlenstoff C = 0,45 bis 0,82%, Mangan Mn = 0,7 bis 1,5 %, Silizium Si = 0,07 bis 0,55 %, wobei der Rückstand durch Eisen Fe und Herstellungsunreinigkeiten gebildet ist.

Es handelt sich z.B. um Schienen, welche aus den Stählen hergestellt sind, die unter der Geschäftsbezeichnung 75 Č SD, mit der Härte ca 250 HV, 85 Č SD-VK, mit der Härte ca 270 HV und 95 Č SD-VK, mit der Härte ca 290 HV, bekannt sind. Die Aufschweißung wird mittels Automaten unter Flußmittel mit der Basizität pH = 1,3 bis 3,2, z.B. mit dem unter der Geschäftsbezeichnung OK FLUX 10.71 bekannten Flußmittel durchgeführt. Es wird ein unlegiertes Zusatzmaterial in der Form von einem Draht mit der nachstehenden chemischen Zusammensetzung aufgeschweißt: Kohlenstoff C = 0,06 bis 0,10 %, Mangan Mn = 0,5 bis 1,5 %, Silizium Si = 0,05 bis 0,50 %, wobei der Rückstand durch Eisen Fe und die Herstellungsunreinigkeiten gebildet ist.

In der folgenden Tabelle I sind die Parameter der Aufschweißung des Zusatzmaterials angeführt. Das Zusatzmaterial ist ein unter der Geschäftsbezeichnung A 106 bekannter Aufschweißdraht mit der folgenden richtmaßgebenden chemischen Zusammensetzung: Kohlenstoff C = 0,07 %, Silizium Si = 0,06 %, Mangan Mn = 1,11 %, Phosphor P = 0,009 %, Schwefel S = 0,011 %, auf die oberen Schienenflächen (Ordnugsnummer 1 - 12) und auf die seitlichen Schienenflächen (Ordnugsnummer 13 - 17) der aus dem Material 75 Č SD und 95 Č SD-VK hergestellten Schienen. Mit diesem Zusatzmaterial wird eine Auftragsschweißung erzielt, deren Härte höchstens um 10% höher als die Härte des Grundmaterials der Schienen ist, d.h. im Bereich von ca 250 HV bis ca 315 HV, wobei sie keinen Martensit enthält, und die zulässigen Fehler den zulässigen Fehlern des Grundmaterials der Schiene entsprechen. Diese Härte der Aufschweißung ist für die Reparaturen von weniger beanspruchten Abschnitten der Gleisanlage, z.B. in den Gleisbogen oder in den geraden Abschnitten geeignet.

Falls es nötig ist, eine Härte der Auftragsschweißung von 285 HV bis 350 HV zu erzielen, wird ein Zusatzmaterial mit einer chemischen Zusammensetzung aufgeschweißt: Kohlenstoff C = 0,06 bis 0,10 %, Mangan Mn = 0,5 bis 1,5 %, Silizium Si = 0,05 bis 0,5 %, Nickel Ni = 1,8 bis 4,5 %, Vanadin V = 0,0 bis 0,2 %, Molybdän Mo = 0,0 bis 0,3 %, Niob Nb = 0,0 bis 0,1 %, Chrom Cr =0,0 bis 0,4 %, Aluminium Al = 0,0 bis 1,6 %, Titan Ti = 0,0 bis 0,1 %, der Rückstand bildet Eisen Fe und Herstellungsunreinigkeiten, wobei die Gesamtmasse des Nickel Ni und der weiteren Legierungselemente, deren untere Grenze 0,0% sein kann, nicht die Summe von 5 % übersteigt. Es handelt sich z.B. um ein unter dem Geschäftsnamen A 234 bekanntes Zusatzmaterial mit einer richtmaßgebenden chemischen Zusammensetzung: Kohlenstoff C = 0,07 %, Silizium Si = 0,3 %, Mangan Mn = 1,2 %, Nickel Ni = 2,3 %, Phosphor P = 0,011%, Schwefel S = 0,014 %, welches unter den in der folgenden Tabelle II angeführten Parametern aufgeschweißt wird, wo auch die Härte der Auftragschweißung angeführt ist. Diese Härte erhöht sich fast nicht mehr bei der folgenden mechanischen Beanspruchung bei dem Betrieb auf der Gleisanlage.

Tabelle I.

| Ord. Nr. | Typ der Schiene | Parameter der Aufschweißung | | | Eingetragene Wärme | Härte |
|---|---|---|---|---|---|---|
| | | U(V) | I(A) | v(cm/min) | Q(kJ/cm) | HV |
| 1 | 95ČSD-VK | 24 | 350 | 75 | 6,38 | 287 |
| 2 | | 24 | 350 | 61 | 7,85 | 295 |
| 3 | | 24 | 360 | 75 | 6,57 | 315 |
| 4 | | 27 | 300 | 75 | 6,15 | 310 |
| 5 | 75ČSD | 24 | 250 | 43 | 7,95 | 255 |
| 6 | | 24 | 250 | 57 | 6,0 | 260 |
| 7 | | 24 | 300 | 60 | 6,84 | 267 |
| 8 | | 24 | 350 | 61 | 7,85 | 265 |
| 9 | | 24 | 360 | 75 | 6,57 | 270 |
| 10 | | 24 | 280 | 65 | 5,90 | 265 |
| 11 | | 24 | 330 | 57 | 7,92 | 263 |
| 12 | | 27 | 350 | 75 | 7,18 | 271 |
| 13 | | 34 | 450 | 60 | 14,50 | 252 |
| 14 | | 34 | 450 | 45 | 19,30 | 264 |
| 15 | | 34 | 550 | 55 | 19,38 | 272 |
| 16 | | 36 | 450 | 60 | 15,39 | 258 |
| 17 | | 38 | 550 | 60 | 19,90 | 261 |

Tabelle II.

| Ord. Nr. | Typ der Schiene | Parameter der Aufschweißung | | | Eingetragene Wärme | Härte |
|---|---|---|---|---|---|---|
| | | U(V) | I(A) | v(cm/min) | Q(kJ/cm) | HV |
| 1 | 75ČSD | 25 | 250 | 60 | 5,94 | 328 |
| 2 | -"- | 25 | 300 | 60 | 7,13 | 328 |
| 3 | -"- | 34 | 350 | 60 | 11,31 | 339 |
| 4 | -"- | 34 | 480 | 60 | 15,5 | 286 |
| 5 | -"- | 38 | 550 | 60 | 19,86 | 289 |
| 6 | 95ČSD-VK | 34 | 450 | 60 | 14,54 | 292 |
| 7 | -"- | 25 | 250 | 60 | 6,18 | 332 |
| 8 | -"- | 30 | 330 | 60 | 9,41 | 346 |
| 9 | -"- | 34 | 480 | 60 | 15,5 | 297 |
| 10 | -"- | 38 | 550 | 60 | 19,86 | 296 |

Die Ordnungsnummern 1 bis 3 sowie 7 und 8 beschreiben Beispiele der Aufschweißung auf die oberen Schienenflächen, während die Ordnungsnummern 4 bis 6 sowie 9 und 10 Beispiele der Aufschweißung an die seitlichen Schienenflächen beschreiben.

Das vorliegende Verfahren zur automatischen oder halbautomatischen Aufschweißung der abgenutzten Abschnitte der Schienenköpfe der Gleisanlage nutzt eine geeignete Kombination der chemischen Zusammensetzung des Grundmaterials der Schiene, des aufgeschweißten Zusatzmaterials und der Aufschweißparameter, d.h. Spannung U, Stromintensität I und Vorschubgeschwindigkeit v im Rahmen der gegebenen Menge der eingetragenen Wärme Q aus. Die eingetragene Wärme Q rangiert bei der Aufschweißung der oberen Schienenflächen im Bereich $Q_o$ = 5,9 bis 11,5 kJ/cm, Vorschubgeschwindigkeit v = 40 bis 75 cm/min., Spannung $U_o$ = 24 bis 34 V und Stromintensität $I_o$ = 250 bis 350 A. Die eingetragene Wärme $Q_s$ für die Aufschweißung der seitlichen Schienenflächen ist 2,6 mal größer und rangiert im Bereich Q, = 15,3 bis 29,9 kJ/cm, Vorschubgeschwindigkeit v = 40 bis 75 cm/min., Spannung $U_s$ = 34 bis 38 V und Stromintensität $I_s$ = 450 bis 550 A.

Durch die Aufschweißung mit diesen Parametern wird die Kohlenstoffdiffusion aus dem Grundmaterial in die Auftragsschweißung unterdrückt, so daß die Auftragsschweißung Kohlenstoff C im Bereich 0,1 bis 0,3 % enthält, wobei die Menge der eingetragenen Wärme Q garantiert, daß bei der Abkühlung in der Luft bei einer Lufttemperatur gleich oder höher als 10° C, die kritische Geschwindigkeit der Abkühlung nicht überschritten wird, welche zur Bildung der martensitschen Strukturen führen würde, und daß in der Auftragsschweißung und ihrer Umgebung keine Riße entstehen.

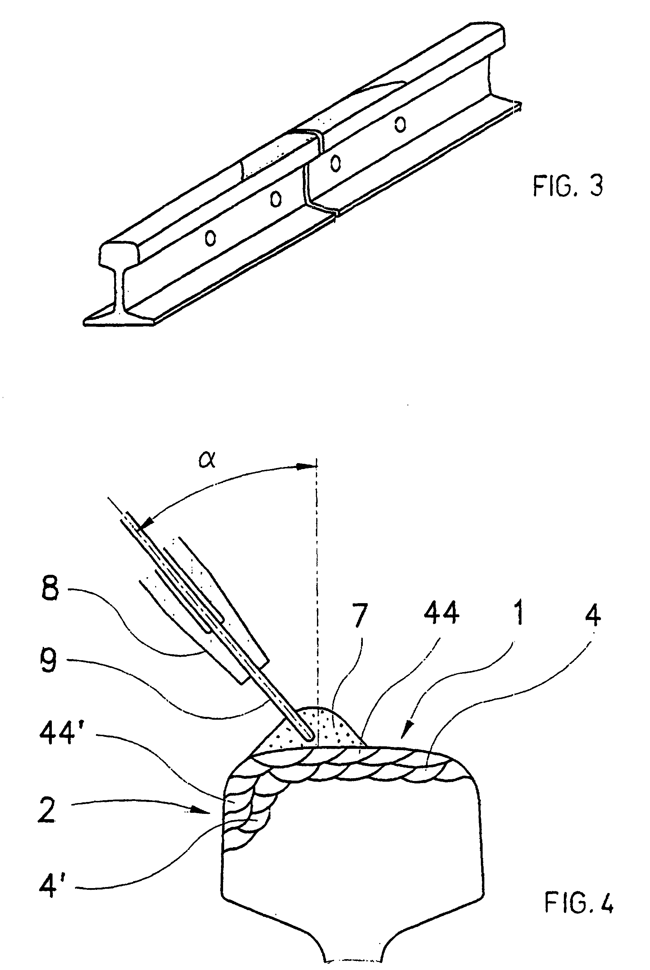

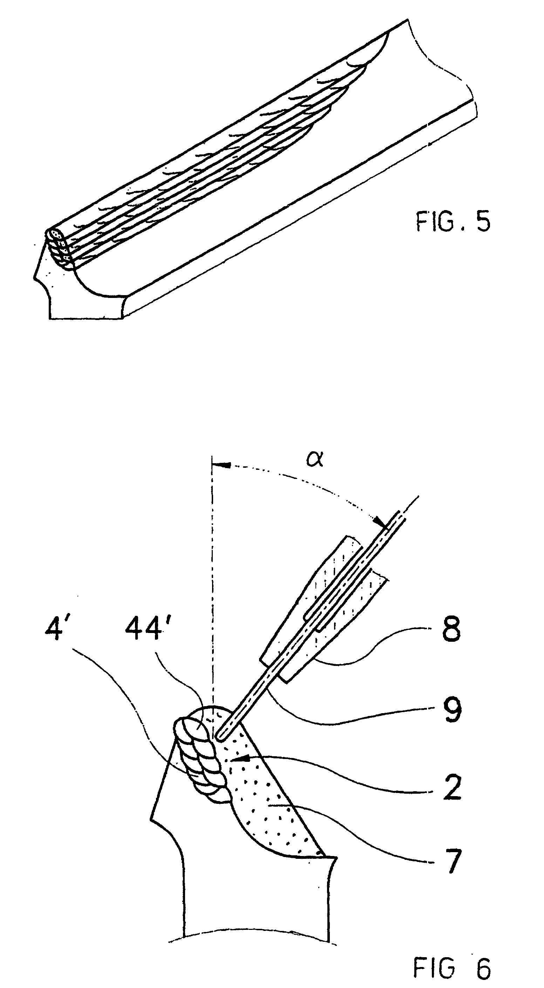

Falls es nötig ist, eine Härte der Auftragsschweißung von ca 350 HV bis ca 5OO HV zuerzielen, was bei den Reparaturen der extrem beanspruchten Abschitte der Gleisanlage erforderlich ist, wie z.B. der Enden der gegenseitig verbundenen Schienen (s. Fig.3, 4), der Weichenzungen (s.Fig.5, 6) und der Herzstücke der Kreuzung, wird es folgendermaßen vorgegangen: Auf die gesäuberten und in Metallglanz geschliffenen abgenutzten Oberflächen wird es eine Unterlegschicht von einer Dicke von mindestens einer Schweißraupe **4, 4'** mit dem Zusatzmaterial und Verfahren nach dem 1. oder 4. Patentanspruch aufgeschweißt, wonach es auf diese Unterlegschicht weitere Schweißraupen **44, 44'** des bisher allgemein benutzten, unter dem Geschäftsname OK-Tubrodur 15.43 bekannten Zusanaterials, von einer richtmaßgebenden chemischen Zusammensetzung aufgeschweißt wird:

Kohlenstoff C = 0,15 %, Silizium Si = max. 0,5 %, Mangan Mn = 1,1 %, Chrom Cr =1,0 %, Nickel Ni = 2,3 %, Molybdän Mo = 0,5 %, Aluminium Al = 1,4 %, und der Rückstand ist Eisen Fe und Herstellungsunreinigkeiten, bzw. OK-Tubrodur 15.65 von einer richtmaßgebenden chemischen Massezusammensetzung: Kohlenstoff C = 0,3 %, Silizium Si = 0,55 %, Mangan Mn = 13,5 %, Chrom Cr =16 %, Nickel Ni = 1,7 %, Molybdän Mo = 0,8 %, Vanadin V = 0,6 %, und der Rückstand wird durch Eisen Fe und Herstellungsunreinigkeiten gebildet. Die Unterlegschicht kann durch eine oder mehrere Schichten von Schweißraupen **4, 4'** und die obere Oberflächenschicht kann auch durch eine oder mehrere Schichten von Schweißraupen **44, 44'** gebildet werden.

Die Parameter der Aufschweißung der oberen Oberflächenschicht mit mehr- oder hochlegiertem Zusatzmaterial sind vom Hersteller empfohlen und sind allgemein bekannt. Durch die Aufschweißung der Unterlegschicht mit einem niedrigen Kohlenstoffgehalt wird eine Verminderung des Kohlenstoffgehalts in der Auftragsschweißung der Oberflächenschicht aus mehr- oder hochlegiertem Zusatzmaterial erzielt. Damit wird eine Beständigkeit der Auftragsschweißung gegen eine spröde Zerstörung erzielt und ferner eine Härte der Auftragsschweißung nach den Forderungen auf den gegebenen exponierten Abschnitte z.B. bei Anwendung von OK Tubrodur 15.43 von 350 bis 400 HV und bei Anwendung von OK Tubrodur 15.65 von 400 bis 500 HV.

Das Verfahren zur automatischen oder halbautomatischen Aufschweißung auf die abgenutzten Abschitte der Schienen der Gleisanlagen kann man bei den Reparaturen der abgenutzten Schienen der Eisen-, Straßen-, Kran-, Seil-, und der analogen Bahnen, sowie Weichenzungen und der Herzstücke der Schienenkreuzungen anwenden. Die Form, bzw. der Querschnitt der Schiene oder der Bestandteile der Gleisanlage beeiflußt dabei keineswegs das vorliegende Verfahren.

## Patentansprüche

1. Verfahren zur automatischen oder halbautomatischen Aufschweißung eines Zusatzmaterials unter Anwendung eines Flußmittels von einer Basizität pH =1,3 bis 3,2 auf die abgenutzten oberen und/oder seitlichen Flächen von Schienen, zum Beispiel von Schienenköpfen, Weichenzungen oder Herzstücken von Schienenkreuzungen von Gleisanlagen, wobei die Stahlschienen eine chemische Zusammensetzung bestehend aus Kohlenstoff C = 0,45 bis 0,82%, Mangan Mn = 0,7 bis 1,5 %, Silizium Si = 0,07 bis 0,55 %, aufweisen, wobei der Rest durch Eisen Fe und Herstellungsverunreinigungen gebildet ist, und das Zusatzmaterial eine chemische Zusammensetzung bestehend aus Kohlenstoff C = 0,06 - 0,10 %, Mangan Mn = 0,5 - 1,5 %, Silizium Si = 0,05 - 0,5 %, und dem Rest aus Eisen Fe und Herstellungsverunreinigungen aufweist, das auf den Schienenkopf mittels eines Lichtbogens bei einer Menge der eingetragenen Wärme Q = (5,9 bis 8,0 kJ/cm). K aufgetragen ist, wobei K= 1 für die Aufschweißung der oberen Schienenfläche und K = 2,6 für die Aufschweißung der seitlichen Schienenfläche und die Vorschubgeschwindigkeit v = 40 bis 75 cm/min. gewählt wird und, wobei

$$Q = \eta . 60 . U. I/v,$$

$\eta$ = Wirkungsgrad,
U = Spannung,
I = Stromintensität
v = Vorschubgeschwindigkeit

2. Verfahren nach Anspruch 1, wobei die Parameter der Aufschweißung der oberen Schienenfläche im Bereich Spannung U = 24 bis 27 V und Stromintensität I=250 bis 350 A gewählt werden.

3. Verfahren nach Anspruch 1, wobei die Parameter der Aufschweißung der seitlichen Schienenfläche im Bereich Spannung U = 34 bis 38 V und Stromintesität I = 450 bis 550 A gewählt werden.

4. Verfahren zur automatischen oder halbautomatischen Aufschweißung eines Zusatzmaterials unter Anwendung eines Flußmittels von einer Basizität pH =1,3 bis 3,2 auf die abgenutzten oberen und/oder seitlichen Flächen von Schienen, zum Beispiel von Schienenköpfen, Weichenzungen oder Herzstücken von Schienenkreuzungen von Gleisanlagen, wobei die Stahlschienen eine chemische Zusammensetzung bestehend aus Kohlenstoff C = 0,45 bis 0,82%, Mangan Mn = 0,7 bis 1,5 %, Silizium Si = 0,07 bis 0,55 %, aufweisen, wobei der Rest durch Eisen Fe und Herstellungsverunreinigungen gebildet ist, und wobei das Zusatzmaterial eine chemische Zusammensetzung bestehend aus Kohlenstoff C = 0,06 - 0,10 %, Mangan Mn = 0,5 - 1,5 %, Silizium Si = 0,05 - 0,5 %, Nickel Ni = 1,8 bis 4,5 %, Vanadin V = 0,0 bis 0,2 %, Molybdän Mo = 0,0 bis 0,3 %, Niob Nb = 0,0 bis 0,1 %, Chrom Cr = 0,0 bis 0,4 %, Aluminium Al = 0,0 bis 1,6 %, Titan Ti = 0,0 bis 0,1 %, wobei die Gesamtmasse des Nickels Ni, Vanadins V, Molybdäns Mo, Niobs Nb, Chroms Cr, Aluminiums Al und Titans Ti in der Summe nicht 5 % übersteigt, und dem Rest aus Eisen Fe und Herstellungsverunreinigungen anfweist, das auf die Schiene mittels eines Lichtbogens bei einer Menge der eingetragenen Wärme Q = (5,9 bis 11,5 kJ/cm).K aufgetragen ist, wobei K= 1 für die Aufschweißung der oberen Schienenfläche und K = 2,6 für die Aufschweißung der seitlichen Schienenfläche und die Vorschubgeschwindigkeit v = 40 bis 75 cm/min. gewählt wird und, wobei

$$Q = \eta \cdot 60 \cdot U \cdot I/v,$$

$\eta$ = Wirkungsgrad,
U = Spannung,
I = Stromintensität
v = Vorschubgeschwindigkeit.

**5.** Verfahren nach Anspruch 4, wobei die Parameter der Aufschweißung der oberen Schienenfläche im Bereich Spannung U = 24 bis 34 V und die Stromintensität I = 250 bis 350 A gewählt werden.

**6.** Verfahren nach Anspruch 4, wobei die Parameter der Aufschweißung der seitlichen Schienenfläche im Bereich Spannung U = 34 bis 38 V und die Stromintensität I = 450 bis 560 A gewählt werden.

**7.** Verfahren nach den Ansprüchen 1 und 4, wobei auf eine so aufgeschweißte Schicht eine Schicht aus einem mehrlegierten Zusatzmaterial aufgeschweißt wird.

**8.** Verfahren nach Anspruch 7, wobei das mehrlegierte Zusatzmaterial eine richtmaßgebende chemische Massezusammensetzung hat: Kohlenstoff C = 0,15 %, Silizium Si = max. 0,5 %, Mangan Mn = 1,1 %, Chrom Cr =1,0 %, Nickel Ni = 2,3 %, Molybdän Mo = 0,5 %, Aluminium Al = 1,4 %, wobei der Rückstand durch Eisen Fe und Herstellungsunreinigkeiten gebildet ist.

**9.** Verfahren nach Anspruch 7, wobei das mehrlegierte Zusatzmaterial eine richtmaßgebende chemische Massezusammensetzung hat: Kohlenstoff C = 0,3 %, Silizium Si = 0,55 %, Mangan Mn = 13,5 %, Chrom Cr =16,0 %, Nickel Ni = 1,7 %, Molybdän Mo = 0,8 %, Vanadin V = 0,6 %, wobei der Rückstand durch Eisen Fe und Herstellungsunreinigkeiten gebildet ist.

**10.** Verfahren nach den Ansprüchen 1 und 4, wobei das Zusatzaufschweißmaterial durch eine Düse zugeführt wird, deren Achse mit der Vertikale (3) einen Winkel $\alpha$ = 0 bis 45° einschließt.

**Claims**

**1.** Method of automatic or semi-automatic welding of additional metal using a fluxing agent having a basicity of pH = 1.3 to 3.2 on a worn-off top and/or side rail surface such as rail heads, switch tongues, crossing frogs at intersections of railroad rails wherein the steel rails have a chemical composition including: carbon C = 0.45% to 0.82%, manganese Mn = 0.7 to 1.5%, silicon Si = 0.07 to 0.55% the remainder consisting of iron and manufacturing impurities and the additional metal has a chemical composition including carbon C = 0.06% to 0.10%, manganese Mn = 0.5 to 1.5%, silicon Si = 0.05 to 0.5% the remainder being iron and manufacturing impurities that is applied on the rail by means of electric arc with the heat from the electric arc supplied to welded materials amounting to Q = (5.9 to 8.0 kJ/cm) x K, wherein K = 1 is chosen for welding a layer on the top rail surface and K = 2.6 for welding a layer on the side rail surface and the welding feed speed v = 40 to 75 cm/min, where

$$Q = \eta \times 60 \times U \times I/v,$$

$\eta$ = efficiency,
U = voltage,
I = current intensity,
v = feed speed.

**2.** A method according to claim 1 wherein the parameters of the process of welding of an overlay on the top rail surface are chosen in the range of: voltage U = 24 to 27 V and current intensity I = 250 to 350 A.

**3.** A method according to claim 1 wherein the parameters of the process of welding of an overlay on the side rail surface are chosen in the range of: voltage U = 34 to 38 V and current intensity I = 450 to 550 A.

**4.** Method of automatic or semi-automatic welding of additional metal using a fluxing agent having a basicity of pH = 1.3 to 3.2 on a worn-off top and/or side rail surface such as rail heads, switch tongues, crossing frogs at intersections of railroad rails wherein the steel rails have a chemical composition including: carbon C = 0.45% to 0.82%, manganese Mn = 0.7 to 1.5%, silicon Si = 0.07 to 0.55% the remainder consisting of iron and manufacturing impurities and the additional metal of a chemical composition including carbon C = 0.06% to 0.10%, manganese Mn = 0.5 to 1.5%, silicon Si = 0.05 to 0.5 %, nickel Ni = 1.8 to 4.5%, vanadium V = 0.0 to 0.2%, molybdenum Mo = 0.0 to 0.3%, Niobium Nb = 0.0 to 0.1.%, chromium Cr = 0.0 to 0.4%, aluminum Al = 0.0 to 1.6%, Titanium Ti = 0.0 to 0.1%, where the overall mass of nickel Ni, vanadium V, molybdenum Mn, niobium Nb, chromium Cr, aluminum Al and titanium Ti does not exceed 5 %, the remainder consisting of iron and manufacturing impurities is applied on the rail by means of electric arc with the heat of electric arc supplied to welded materials amounting to Q = (5.9 to 11.5 kJ/cm )x K, where K = 1 is chosen for welding a layer on the top rail surface and K = 2.6 is chosen for welding a layer on the side rail surface and the welding feed speed v = 40 to 75 cm/min, where '

$$Q = \eta \times 60 \times U \times I / v,$$

$\eta$ = efficiency,
U = voltage,
I = current intensity,
v = feed speed and

**5.** A method according to claim 4 wherein the parameters of the process of welding of an overlay on the top rail surface are chosen in the range of: voltage U = 24 to 27 V and current intensity I = 250 to 350 A.

**6.** A method according to claim 4 wherein the parameters of the process of welding of an overlay on the side rail surface are chosen in the range of: voltage U = 34 to 38 V and current intensity I = 450 to 550 A.

**7.** A method according to claims 1 to 4 wherein upon once welded-on layer a layer of high alloyed material is welded.

**8.** A method according to claim 7 wherein the high alloyed additional metal has the following chemical mass composition: carbon C = 0.15 %, silicon Si = max. 0.5 %, manganese Mn = 1.1 %, chromium Cr = 1.0 %, nickel Ni = 2.3 %, molybdenum Mn = 0.5%, aluminum Al = 1.4 %, while the remainder consists of iron Fe and manufacturing impurities.

**9.** A method according to claim 7 wherein the high alloyed additional metal has the following chemical mass composition: carbon C = 0.3 %, silicon Si = 0.55 %, manganese Mn = 13.5 %, chromium Cr = 16.0 %, nickel Ni = 1.7 %, molybdenum Mn = 0.8 %, vanadium V = 0.6 %, whereby the remainder consists of iron Fe and manufacturing impurities.

**10.** A method according to claims 1 and 4 wherein the additional metal is fed through a nozzle(8), the axis of which forms with the vertical line (3) an angle of $\alpha$ = 0 to 45°.

**Revendications**

**1.** Procédé destiné au rechargement par soudure automatique ou semi-automatique avec un matériau d'apport en utilisant un flux avec une basicité pH = 1,3 à 3,2 sur des surfaces supérieures et/ou latérales usées de rails, telles que les patins de rail, les lames d'aiguillage ou les coeurs de croisements ferroviaires sur des voies ferrées, les rails en acier ayant une composition chimique contenant du carbone C = 0,45 à 0,82 %, du manganèse Mn = 0,7 à 1,5 %, du silicium Si = 0,07 à 0,55 %, le reste étant formé par du fer Fe et des impuretés d'élaboration, et le matériau d'apport présente une composition chimique contenant du carbone C = 0,06 à 0,10 %, du manganèse Mn = 0,5 à 1,5 %, du silicium Si = 0,05 à 0,5 % et le reste étant formé par du fer Fe et des impuretés d'élaboration, lequel est déposé sur le patin de rail au moyen d'un arc électrique avec une quantité de chaleur appliquée Q = (5,9 à 8,0 kJ/cm).K, sachant que K = 1 pour le rechargement de la face supérieure du rail et K = 2,6 pour le rechargement de la face latérale du rail, et en choisissant la vitesse d'avance v = 40 à 75 cm/min, dans lequel procédé

$$Q = \eta . 60. U. I/v,$$

$\eta$ = rendement,
U = tension,
I = intensité du courant,
v = vitesse d'avance.

**2.** Procédé selon la revendication 1, dans lequel les paramètres du rechargement par soudure de la face supérieure du rail sont choisis dans la fourchette de valeurs : tension U = 24 à 27 V et intensité du courant I = 250 à 350 A.

**3.** Procédé selon la revendication 1, dans lequel les paramètres du rechargement par soudure des faces latérales du rail sont choisis dans la fourchette de valeurs : tension U = 34 à 38 V et intensité du courant I = 450 à 550 A.

**4.** Procédé destiné au rechargement par soudure automatique ou semi-automatique d'un matériau d'apport en utilisant un flux avec une basicité pH = 1,3 à 3,2 des surfaces supérieures et/ou latérales usées de rails, telles que les patins de rail, les lames d'aiguillage ou les coeurs de croisements ferroviaires sur des voies ferrées, les rails en acier ayant une composition chimique contenant du carbone C = 0,45 à 0,82 %, du manganèse Mn = 0,7 à 1,5 %, du silicium Si = 0,07 à 0,55 %, le reste étant formé par du fer Fe et des impuretés d'élaboration, et le matériau d'apport présentant une composition chimique contenant du carbone C = 0,06 à 0,10 %, du manganèse Mn = 0,5 à 1,5 %, du silicium Si = 0,05 à 0,5 %, du nickel Ni = 1,8 à 4,5 %, du vanadium V = 0,0 à 0,2 %, du molybdène Mo = 0,0 à 0,3 %, du niobium Nb = 0,0 à 0,1 %, du chrome Cr = 0,0 à 0,4 %, de l'aluminium Al = 0,0 à 1,6 %, du titane Ti = 0,0 à 0,1 %, la masse totale du nickel Ni, vanadium V, molybdène Mo, niobium Nb, chrome Cr, aluminium Al et titane Ti ne dépassant pas 5 %, et le reste étant formé par du fer Fe et des impuretés d'élaboration, lequel est déposé sur le patin de rail au moyen d'un arc électrique avec une quantité de chaleur appliquée Q = (5,9 à 11,5 kJ/cm).K, sachant que K = 1 pour le rechargement de la face supérieure du rail et'K = 2,6 pour le rechargement de la face latérale du rail, et en choisissant la vitesse d'avance v = 40 à 75 cm/min, dans lequel procédé

$$Q = \eta . 60. U . I/v,$$

$\eta$ = rendement,
U = tension,
I = intensité du courant,
v = vitesse d'avance.

**5.** Procédé selon la revendication 4, dans lequel les paramètres du rechargement par soudure de la face supérieure du rail sont choisis dans la fourchette de valeurs : tension U = 24 à 34 V et intensité du courant I = 250 à 350 A.

**6.** Procédé selon la revendication 1, dans lequel les paramètres du rechargement par soudure des faces latérales du rail sont choisis dans la fourchette de valeurs : tension U = 34 à 38 V et intensité du courant I = 450 à 560 A.

**7.** Procédé selon les revendications 1 et 4, dans lequel, sur une couche ainsi rechargée, on recharge une couche formée par un matériau d'apport à plusieurs éléments d'alliage.

**8.** Procédé selon la revendication 7, dans lequel le matériau d'apport à plusieurs éléments d'alliage possède une composition chimique de référence: carbone C = 0,15 %, silicium Si = 0,5 % max., manganèse Mn = 1,1 %, chrome Cr = 1,0 %, nickel Ni = 2,3 %, molybdène Mo = 0,5 %, aluminium Al = 1,4 %, le reste étant formé par du fer Fe et des impuretés d'élaboration.

**9.** Procédé selon la revendication 7, dans lequel le matériau d'apport à plusieurs éléments d'alliage possède une composition chimique de référence: carbone C = 0,3 %, silicium Si = 0,55 %, manganèse Mn = 13,5 %, chrome Cr = 16,0 %, nickel Ni = 1,7 %, molybdène Mo = 0,8 %, vanadium V = 0,6 %, le reste étant formé par du fer Fe et des impuretés d'élaboration.

10. Procédé selon les revendications 1 et 4, dans lequel le matériau d'apport est acheminé par l'intermédiaire d'une buse, dont l'axe fait avec la verticale un angle $\alpha$ = 0 à 45°.

EP 0 866 741 B1

FIG. 2

FIG. 1

13

FIG. 3

α

8
9
44'
2
4'

7    44    1    4

FIG. 4

EP 0 866 741 B1

FIG. 5

α

4′  44′

8

9

2

7

FIG 6

15